# EUROPEAN PATENT APPLICATION

(11) **EP 4 570 060 A1**
(43) Date of publication of application: **18.06.2025**
(21) Application number: 24214769.2
(22) Date of filing: 22.11.2024
(51) Int. Cl.: A01G 7/04

(54) **AUTONOMOUS LIGHTING SYSTEM FOR PLANT CULTIVATION**

(30) Priority: 24.11.2023 PL 44684023
(71) Applicant: Niviss Leszek Losin Sp.j., 81577 Gdynia (PL)
(72) Inventor: The designation of the inventor has not yet been filed
(74) Representative: Pawlowska-Bajerska, Justyna

(57) **Abstract**

The subject of the invention is an autonomous lighting system, i.e., an autonomous lighting fixture with an adjustable optical radiation spectrum, equipped with an active module featuring a system for modifying the optical radiation spectrum during the cultivation process, aimed at activating vegetation and controlling plant flowering. The invention also pertains to the lighting module itself, specifically an LED lighting module for activating vegetation and controlling plant flowering, as well as a method for activating vegetation and controlling plant flowering. The invention is applicable to the cultivation of red-leaf plants, particularly for flowering activation. The invention is especially suited for plant cultivation in vertical farms and greenhouse operations.

## Description

The invention refers to an autonomous lighting system therefore autonomous light fixture, luminaire, light fitting with an adjustable optical radiation spectrum with an active module with system for changing, altering of optical radiation - light spectrum during cultivation to stimulate vegetation and control plant flowering. The invention also refers to lighting LED module for vegetation activation - vegetation stimulation and plant flowering control, as well as method for plant cultivation for activating vegetation and controlling flowering. The invention is used for cultivating red-leaf plants to control and activate flowering and vegetation. The invention can be used especially in vertical farms and greenhouse cultivation.

Different plants require specific lighting conditions, as noted in patents CN103947470 and CN103947469. For instance, light component ratios of blue, red, and yellow for soybean cultivation are specified as 3:1:5 and 4:3:3, highlighting the diverse optical radiation needs among plant species. State of the art emphasize the need for dedicated lighting fixtures - luminaires dedicated - tailored to specific plant types and their growth stages, such as germination, seedling, growth, vegetation, pre-flowering, and flowering phases.
The described lighting fixtures, system employs electroluminescent LEDs and are used in agriculture. Patent US11402089B2 outlines that such a system should include emitters in the ranges of 551-2000 nm and 100-500 nm, with additional emitters in the 490-510 nm range, alongside white LEDs. Each set of LEDs can be individually powered and controlled via a network connection, allowing precise spectral adjustments for specific growth needs. However, this solution relies on external controllers to manage the channels, requiring constant connectivity with each LED set, which could be a limitation and disadvantages .
Another example of a luminaire designed for plant cultivation is disclosed in WO2013141824A1. This luminaire is characterized by the variability of emitted energy within the photosynthetically active radiation (PAR) range. It includes LED light sources and a control circuit for a driver module that enables the operation of these LEDs individually or through integration with a control system and housing. The control module manages the combination of light sources and intensifies the spectral structure of the emitted light, enhancing both short and long wavelengths corresponding to chlorophyll a and chlorophyll b. The luminaire's spectral range is not strictly defined but is designed to cover specific wavelengths such as 430 nm, 452 nm, 642 nm, and 662 nm. It features a control module that allows spectrum adjustments based on the plant's developmental phase. The device is designed to be controlled via Wi-Fi, RF, IR, Bluetooth, or similar systems. According to the description, control can be implemented using standards such as DMX, DALI, or 1-10V. This means that the luminaire functions as an executive device, requiring external controller input to initiate changes in lighting parameters. Disadvantages of this solution is the need to maintain power on the communication line, which reduces the lighting fixture's efficiency. Furthermore, the solution does not have significant applications for inducing, controlling flowering in red-leaf plants specifically adapted to their developmental phases.

Other solutions for luminaires capable of adjusting the spectrum of optical radiation based on the broad needs of plants are also known. For example, US9681515B2 describes a method for adapting the emission spectrum of an integrated LED structure for photobiological processes. This method includes: generating output emission power by supplying a common current to semiconductor light-emitting sources in LEDs; tuning multiple emission spectrum intensity peaks to a nominal operating point by adjusting the common current to a range of average values; adjusting the intensity ratios of multiple emission spectrum peaks over a full range by regulating the common current from a minimum to a maximum value.

In KR101463982B1, a plant cultivation device with LED lighting is described. The lighting component contains LEDs emitting light in different colors and a control unit that adjusts the light intensity for each LED emitting light of the same color. This enables different lighting modes based on the type and growth stage of plants, with the capability to store relevant light intensity information for each lighting mode. Providing suitable light to the plant reduces energy consumption by limiting optical radiation in spectral ranges not used by plants. The ability to adjust the spectrum of optical radiation is essentially offered by many luminaires. However, most of these luminaires are laboratory-grade and allow control of multiple independent channels responsible for activating LEDs with different spectral characteristics. In luminaires for greenhouse applications and vertical farming, fixtures with two or more channels are available. These additional channels are designed for stimulating germination. A limitation, disadvantages of this solution is the lack of a smooth spectral adjustment during cultivation. Additionally, this solution does not have significant applicability for inducing flowering in red-leaf plants dedicated - tailored to their growth phases.

The description of US10772260 discloses a lighting system for plant cultivation. This system comprises a support plate assembly containing multiple holes and several LED modules that are detachably connected to the support plate within the holes, creating a gap between the LED module and the support plate. The cultivation lighting system can be configured to draw air through the gap above the LEDs and along the heatsink fins to reduce the LED module's temperature. The solution details a plant cultivation lighting system with multiple LED modules that are detachably connected to the support plate assembly. Additionally, the system is configured to allow the transmission of cultivation program information. The LEDs emit light within a wavelength range of approximately 400 nm to 700 nm. However, a drawback of this solution is the lack of control over the resultant spectrum-specifically, the inability to automatically adjust the spectrum over time according to the plant's developmental stage and size.

Similarly, US11297772 describes a cultivation lighting system consisting of a support plate assembly defining multiple holes and multiple LED modules. This system includes first, second, third, fourth, and fifth LEDs, each configured to emit light at different wavelengths at different times. The system features a cultivation program designed to regulate the intensity of light emitted by each LED type via a controller. The first LEDs are configured to emit light at wavelengths of 450-740 nm; the second LEDs emit light at wavelengths within the same range but different from the first LEDs; the third LEDs emit light with a color temperature of 2000-4000 K; the fourth LEDs emit light with a color temperature of 5000-10000 K; and the fifth LEDs emit light at wavelengths of 315-400 nm. However, this solution also lacks the ability to control the resultant light spectrum automatically, adjusting it over time based on the plant's development stage and size.

The description of US10149439 discloses similar system to the above, utilizing multiple LEDs with a wavelength range of approximately 400 nm to 700 nm. Specifically, the lighting system includes at least one LED with a wavelength in the range of approximately 620 nm to 665 nm and at least one LED with a wavelength in the range of approximately 455 nm to 470 nm. However, this solution is not suitable for controlling e.g. inducing the flowering of red-leaf plants tailored to their developmental stage.

The description in CN113179788 disloses a method for adjusting and controlling the light environment to support cucumber growth at every growth stage. This method includes providing an artificial light source for growing cucumber seedlings to promote their development. The method for regulating and controlling sunlight to stimulate cucumber growth involves adjusting light parameters suitable for cucumber growth throughout the entire growth period, from seed germination to cucumber fruit harvesting.

This approach enhances seedling vigor and resistance to diseases during winter or in low-light environments, encourages early flowering, and improves both yield and quality of cucumbers. The light environment control method involves providing artificial light to cucumber seedlings during each growth stage, with the artificial light spectrum calculated based on the following percentage integration of light quality spectrum: 0-3% infrared, 65%-85% red light, 15%-30% blue light, 0-10% continuous visible light, and 0-3% ultraviolet light. However, this solution is not dedicated for controlling, inducing flowering in red-leaf plants specifically. Instead, it is focused on the entire growth process of cucumbers, from seed germination to fruit harvesting, requiring the same light spectrum with a dominance of red light throughout the growth period.

Based on the state of the art there is still a need, requirements for solutions dedicated to specific plants that improve the quality of cultivated plants, focusing on inducing vegetation and controlling flowering, including activating flowering-a critical stage of plant development-using artificial lighting. Additionally there is requirement for providing methods to reduce electricity consumption in cultivation processes, either by minimizing energy use or by increasing yield while maintaining current energy consumption, are highly sought after. There is need to provide solutions for automated, controlled induction of flowering tailored to the developmental phase and specific plant type.

The purpose and objective of the invention was to provide invention dedicated to an important group of plant - red-leaf plants, enabling the activation of vegetation and control of flowering while also being energy-efficient, economical.

Far-red light, often combined with other light spectra, (especially deep red), has been shown to significantly increase yields, potentially impacting five key areas: cell expansion, phytochrome manipulation, photosynthesis rate, greater total leaf area, and assimilation partitioning. Photons with wavelengths in the 600 to 700 nm range generally define the red light spectrum, including deep red, which occurs around 660 nm.

Incorporating far-red radiation can potentially extend the red spectrum up to 750 nm or even as far as 850 nm. However, it is crucial to note that not all wavelengths are suitable for every plant. Consequently, far-red and deep red light are more critical for some plants than others, emphasizing the need to develop solutions that allow the light spectrum to be adjusted for specific plant cultivation to induce flowering effectively.

During the invention's provision, development of the invention, it was observed that known solutions lack specific components of light within the red and far-red spectrum, which were found to be critical for inducing vegetation and controlling the flowering of red-leaf plants at specific stages of their lifecycle. Similarly, it was noted that the blue light component is also essential. Blue-violet light, as part of visible light, has wavelengths ranging from 380 to 500 nanometers.

Research and experimental studies conducted during the invention's provision, development, showed that these elements are key to variable-spectrum lamps for inducing vegetation and controlling flowering, as well as adapting to the plant's developmental phase. Changes in the spectrum are linked to developmental stage transitions and the triggering of specific plant reactions. Controlling, inducing flowering through light selection based on the developmental phase was one of the invention's primary goals as a critical plant development reaction.

Studies were conducted to provide the invention and tailor the wavelength range of radiation to stimulate vegetation activation and control, including flowering induction, depending on the cultivation phase of red-leaf plants, while maintaining appropriate energy consumption.

To create the invention, extensive design and preparatory work was performed. This included testing previously manufactured and used lamp modules (calibrating the intensity of individual channels), designing and manufacturing new lamp prototypes with variable spatial radiation beam distribution, and developing and building control systems for the new lamp prototypes. Preliminary cultivation cycles were carried out across various developmental phases using different beam shaping mechanisms and radiation spectrum changes over time for red-leaf plants. These experiments were conducted under controlled environmental conditions in phytotrons.

A comprehensive evaluation was conducted on the applied beam shaping mechanisms and radiation spectrum variations over time. This assessment included biological plant material analysis and technical lamp parameter measurements. Studies included dry mass measurements, leaf colorimetric assessments, biochemical substance analysis (relevant for accelerating plant flowering), as well as photometric and directional measurements of the new lamp prototypes. Additionally, electric power consumption measurements were conducted to determine the total energy usage throughout the cultivation cycle.

Unexpectedly, it was discovered that in known solutions, it is possible to significantly reduce the amount of electricity consumed during a cultivation cycle by implementing a program that stabilizes the intensity of optical radiation on the cultivation surface, defined as PPFD (photosynthetic photon flux density), while simultaneously changing the spectrum over time. PPFD represents the total contribution of radiation within a specific range-in this invention, red and blue light. PPFD indicates how many photons in the PAR range fall per square meter. This is related to the lower energy of individual red photons compared to blue photons.

Electroluminescent light emitters, such as blue LEDs, emit fewer photons than red LED light emitters despite having comparable radiometric efficiency. The PPFD stabilization developed for this invention involves delivering the same number of photons to the cultivation surface regardless of the configured optical radiation spectrum. During periods with a high red radiation component, significant energy savings can be achieved. By gradually altering the spectrum over time, the invention also preserves the aesthetic qualities of cultivated plants, ensures appropriate plant mass, and, most importantly, stimulates flowering.

According to the invention, the radiation from the blue and red spectrum is selected to maintain a constant PPFD, meaning that the PPFD contribution of blue radiation is symmetrical to that of red radiation. The stabilization of PPFD involves delivering the same number of photons to the cultivation surface from the seedling stage to vegetation and the early flowering stage, regardless of the optical radiation spectrum configuration (red or blue). Thus, increasing the PPFD for blue light proportionally decreases the PPFD for red light by the same amount.

Research conducted during the development - provision of the invention showed that red-leaf plants grew larger when exposed predominantly to optical radiation in the 615-680 nm range compared to the 420-480 nm range. Some plant species showed the greatest growth when illuminated solely within the 615-680 nm range. However, such lighting negatively affected the appearance of the plants, particularly leaf coloration.

To increase yield and control, including activating flowering while maintaining proper coloration, a system was provided with an active mechanism to alter - change the optical radiation spectrum. This system includes algorithms - the provided light change function that change the light composition depending on the plant's life stage adjust the balance of blue and red components in the emitted optical radiation from the luminaire, tailored - dedicated to the selected developmental phase of the plant.

### Description of a method for activating vegetation and controlling flowering in red-leaf plants depending on their developmental stage

Cultivation is conducted from the seedling or rooted cutting stage to the end of the expected vegetation phase during cultivation and, preferably, to the beginning of flowering if this stage is expected, required. For certain plants, such as lettuce, flowering is not desirable as the goal is yield harvesting, which is also included, accounted for in the invention.

Based on research conducted during the provision of the invention, it was determined that cultivating red-leaf plants using the invention-an autonomous lighting fixture with LED modules-should begin in the early developmental phase of the plant, either as seedlings or rooted cuttings, depending on the plant type. At this stage, the spectral composition of radiation should comprises of less than 20% blue light, with a proportional red light component of at least 80% and up to 100%, depending on the advancement of the initial cultivation phase. Adjustments to the spectral composition during cultivation are performed according to a developed light change function tailored to the cultivation duration, from the initial stage to the end of vegetation and, if necessary, to the onset of flowering for its stimulation.

In this initial stage of cultivation, the earlier the seedling or rooted cutting phase (depending on the plant type), the higher the proportion of red light. This is checked, evaluated before cultivation begins, and the initial spectral composition is recorded in a computing unit equipped with memory - computer-readable storage medium, readable data carrier.

In the next stage, during growth-the early vegetative phase up to the stimulation of vegetation and optionally, preferably flowering, at the beginning of the vegetative phase, a higher initial proportion of red light is used, but less than 80%, preferably less than 70%, with 20-30% blue light component. The proportion of blue light is gradually increased during cultivation according to a developed light change function, dedicated tailored to the cultivation duration. This is further disclosed based on the plant division - growth rate of the plants, from seedlings/rooted cuttings through vegetation and even to the onset of flowering, as required by the cultivation duration. The later the plant's developmental phase, especially when flowering stimulation is desired, the lower the percentage of red light and the higher the proportion of blue light is selected.

Thus, during the vegetative phase, the proportion of blue light exceeds 20% of the total light (combined blue and red light), preferably ranging from 30% to even 100%, with the blue light component increasing during cultivation at this stage.

When it is necessary, requirement to extend the vegetative period to avoid unwanted flowering before harvest, such as for lettuce, the spectral composition is adjusted according to the developed light change function. This adjustment aligns the light components with target values for red-leaf plant cultivation, depending on the growth rate from seedling/rooted cutting stages. Blue light is increased to above 20%, preferably to 30-100%, with a progressively higher proportion of blue light as the cultivation progresses.

In such cases-where the goal is to delay or even block flowering-the proportion of red light is reduced more quickly in favor of blue light as the later vegetative stage approaches. The later the developmental phase of the plant, the more rapidly the proportion of red light is decreased in favor of blue light to achieve the desired effect of blocking flowering.

In general, for both scenarios, at the final stage of cultivation-whether during the vegetative phase or the first signs of flowering-a higher percentage of blue light is applied as the plant's life phase progresses.

According to the invention, to promote plant mass gain, a higher proportion of red light is utilized, as described above, at levels below 80%. However, during the last 3-4 days of the vegetative phase, a significant proportion of blue light is introduced. In cases where extending the vegetative phase is desired, such as for lettuce, the proportion of blue light is gradually increased, with a faster increase towards the end of cultivation in the vegetative phase.

Additionally, it was determined that to accelerate leaf coloration during the final cultivation stage, a stepwise function (light change function) is preferably used.

According to the invention, the initial intensity of red light is at least 80%, while the proportion of blue light is preferably 10-20% of the total light (combined red and blue light). The final intensity of blue light exceeds 70%, preferably 70-80% of the total light, but can range from 70% to 100%. The adjustment of light intensity - light change, modification is tailored according to, based on four classifications, group of red-leaf plants, identified through experimental research. These classifications correspond to four established PPFD (photosynthetic photon flux density) modification functions - provided light change function that are specifically adapted to the growth rate of these plants, from the seedling/rooted cutting stage through vegetation / up to the onset of flowering.

It was determined that effective results are achieved when red light in the range of 615 nm to 680 nm is used, preferably with a peak radiation at 663 nm, and blue light in the range of 420 nm to 480 nm, preferably with a peak radiation at 450 nm. It is advantageous to use at least one red light emitter in the range of 640 nm to 660 nm and at least one blue light emitter in the range of 440 nm to 460 nm. Additionally, it is preferable to use a white light emitter with a correlated color temperature (CCT) in the range of 1600K to 3000K in the channel with the red electroluminescent emitter and a white light emitter with a CCT in the range of 4000K to 6500K in the channel with the blue emitter.

On average, cultivation conducted according to the invention, from the seedling or rooted cutting phase (depending on the plant type) to vegetation, harvest, or the onset of flowering (depending on the intended use of the species), typically lasts 180 days, or 20-30 days for certain crops. For example, lettuce cultivation may last approximately 21-30 days. For lettuce, studies were conducted using linear, stepwise, and exponential light adjustments - provided light change functions.

During cultivation using the invention, from the seedling or rooted cutting stage (depending on the plant type) to the first signs of flowering-that is, during the plant's development and transition between growth stages-the proportion of blue light is increased according to one of four PPFD adjustment functions light change functions. These functions are applied depending on the day of cultivation and are tailored - fit, selected to the rate of phase transitions and the plant species, as explained further below.

Based on the invention a control system designed to stabilize PPFD, ensuring that the same number of photons is delivered to the cultivation surface from the seedling or rooted cutting stage through vegetation and the onset of flowering or its suppression, regardless of the configured optical radiation spectrum. The described adjustment of the red-to-blue ratio - light change from red to blue - according to the plant's life stage is implemented, realized by altering - change PPFD values to correspond to the percentage of red and blue radiation, following - according to a linear, logarithmic, stepwise, or exponential function - provided light change functions.

The specific spectral percentage is selected for each red-leaf plant species - plant groups based on its growth rate, from the seedling or rooted cutting stage (depending on the plant type) to vegetation and, preferably, the onset of flowering. The percentage of blue light radiation increases as the plant transitions from the seedling or rooted cutting stage (depending on the plant type and the start of cultivation using the invention) to the growth stage, i.e., vegetation. This increase in blue light proportion-PPFD-is implemented, realized through / based on the one of the provided adjustment functions (light change functions), with a corresponding decrease in red light radiation as cultivation progresses from the seedling stage to vegetation and, optionally, the onset of flowering.

During research and experimental studies on the invention, studies were conducted on the effects of red and blue light. Based on these studies, various spectral change functions - light change function-algorithms for modifying the optical radiation spectrum over time-were developed, which are listed below as PPFD change functions based on cultivation time. As shown in Example 1, cultivation experiments were conducted with representative species of red-leaf plants, and based on these experiments, specific light adjustment functions were provided - four light change functions depending on the developmental stage - change in contribution/input of red/blue light during duration of cultivation from the seedling or rooted cutting stage (depending on the plant type) to vegetation and, preferably, the onset of flowering if this is required. Example 1 presents only selected species from those studied to confirm the invention's development.

Based on the research experimental studies, it was determined that other spectral change functions within the aforementioned ranges could be applied during the plant's development. Four types of transition functions - light change function were therefore provided, developed, from the previously described initial optical radiation spectrum to the previously described final optical radiation spectrum, i.e., transitioning from a high proportion of red light to an increasing proportion of blue light.

The change can be realized, implemented using the developed adjustments-referred to as light change functions - including linear, logarithmic, stepwise, and exponential functions. These changes are executed by an algorithm, computer programme implemented in a computing unit - equipped with memory - computer-readable medium / storage with implementing light change functions - instructions, data carrier, such as a microprocessor-an active system for modifying the optical radiation spectrum for the cultivation of red-leaf plants-which forms part of an autonomous lighting fixture luminaire, light fitting with an autonomous lighting module. The type of function is selected depending on the cultivation duration, the developmental stage of the seedling/cutting, and the plant species, according to the described classification of plant depending of the duration of growth described below.

It was developed during the studies of the invention - provided that a logarithmic function is suitable - dedicated - applied for long-growing red-leaf plant species, i.e., those requiring a long transition period from the seedling or rooted cutting stage (depending on the plant type) to the end of vegetation or even to onset of flowering, approximately 100-220 days, with 180 days as an example. An exponential function is used, according to the invention for short, fast-growing plants, typically requiring 20-40 days, with 30 days as an example. A linear function is applied for moderate growth transitions from the seedling/rooted cutting stage to the end of vegetation or the onset of flowering, typically less than 100 days, with 61 days as an example. Finally, a stepwise function is used for decorative red-leaf plants, as shown in the example of a cultivation period lasting approximately 21 days.

The classification by growth duration is well known to those skilled in the art. According to the invention, a method for changing the proportion of red and blue light was developed - provided based on the studies, which is precisely illustrated in the provided graphs and the provided light change function were linked to the classification mentioned before.

Preferably, a linear phase adjustment - light change function is applied.

It was also developed - provied that in the stepwise function, changes to the spectral ranges are set at least once during the cultivation period, preferably with two or three changes-i.e., gradual adjustments depending on the growth rate. It is thus possible to implement different stepwise change functions, such as a single change, double change, etc., with a double change being preferable-one around the middle phase of cultivation, according to the invention, and another a few days before the end.

The above was developed based on experimental studies of numerous species of red-leaf plants.

The function pertains to changing the output current of each light source channel-blue and red. The adjustment of the red and blue components is based on changes in the total PPFD (photosynthetic photon flux density)-i.e., the total number of photons per unit area of the cultivated surface for the red and blue components. This ensures that the same total number of photons is delivered to the cultivation surface throughout the cultivation period, from seedling to vegetation and the onset of flowering, regardless of the configured optical radiation spectrum.

Functions were developed to ensure that PPFD intensity ranges between approximately 150-800 µmol/m²/s, preferably around 200 µmol/m²/s, as shown in the graphs, with an appropriate increase in the proportion of blue light according to the developed adjustments.

In the computational unit - carrier/medium with memory, such as a microprocessor - the active system for modifying the optical radiation spectrum it is stored, saved the following: the plant species according to the aforementioned classification, the matching spectral change function - light change function based on the cultivation duration, and the determined cultivation time of the cultivated plant -from the seedling or rooted cutting stage (depending on the plant type) to, at most, the first signs of flowering (for some species, rapid flowering is undesirable, e.g., lettuce, where the growth period is extended). According to the invention, the initial development stage of the plant (the plant's advancement at the start of cultivation according to the invention) shall be stored, in the unit with memory, and based on this, the initial proportion of optical radiation spectrum in the red and blue ranges is adjusted depending on the development stage of the seedling/rooted cutting, and preferably the average cultivation temperature.

Thus, the invention involves applying an appropriate computational unit-control-equipped with memory-where, in addition to implementing the aforementioned spectral change functions tailored to the growth rate of the plant, parameters such as the total cultivation duration, including the growth phases (from seedling/rooted cutting to the onset of flowering), the initial development stage, and the initial spectral proportion are input. Preferably, the cultivation temperature is also recorded. The degree and range of wavelength adjustments and the percentage of red/blue light in the PPFD function over time are selected according to the previously described classification.

Before cultivation begins, an appropriate spectral change function is selected based on the aforementioned classification, tailored to the total cultivation duration and the classification of red-leaf plants by growth rate from seedling/rooted cutting to the onset of flowering. The initial percentage of red to blue light in the radiation spectrum is determined based on the development stage of the seedling/rooted cutting. Additionally, a real-time measurement of cultivation time is preferably sent to the computational unit with the active system to adjust the percentage of specific radiation based on the total number of cultivation days entered in the system, in accordance with the spectral change function, and preferably real-time temperature readings to adapt to recorded conditions-for vertical farming.

Changes in optical radiation over time can be implemented by maintaining the intensity of optical radiation on the cultivation surface while modifying the spectrum, by varying the intensity of optical radiation on the cultivation surface while keeping the spectrum constant, or by combining both mechanisms simultaneously. The invention thus includes developed adjustments to the proportions of blue and red light-spectral changes over time with the stabilization of symmetrical PPFD (maintaining constant optical radiation intensity on the cultivation surface). According to the invention, PPFD is stabilized, ensuring that the same total number of photons is delivered to the cultivation surface throughout the entire cultivation period, from seedling to vegetation and the onset of flowering, regardless of the configured optical radiation spectrum. The number of photons on the cultivation surface, represented by PPFD, remains constant during cultivation regardless of spectral changes.

**Description of the lighting system - an autonomous lighting system with a lighting module with an active spectrum-changing system and functions for selecting parameters to induce / controlling flowering.**

An autonomous lighting system, also referred to as an autonomous module or autonomous lighting fixture, luminaire with an electroluminescent lighting module, comprises of functionally integrated components housed within a single enclosure.

It is possible to integrate multiple autonomous systems connected to a central computational unit equipped with memory, such as a computer.

An autonomous lighting system can thus operate as part of a larger lighting system, which comprises **N** autonomous systems (modules), an external controller such as a computer, and communication systems-either wireless (e.g., Wi-Fi) or wired. However, a single autonomous lighting system-an autonomous lighting fixture-does not require an external controller to function.

The essential component of a single autonomous system-an autonomous lighting fixture-is the electroluminescent lighting module, specifically an LED module, which includes at least one type of red LED and one type of blue LED-electroluminescent emitters.

The lighting module contains LEDs, specifically at least one blue-light-emitting LED and at least one red-light-emitting LED within their respective wavelength ranges. The lighting module is therefore dual-channel, with separate control for the blue LEDs and red LEDs. For instance, it may contain two LEDs. It is also advantageous to equip the lighting module with at least one white-light-emitting LED. The specific wavelength ranges for the emitters are described later.

Additionally, the autonomous lighting system preferably includes a known LED module controller linked to the lighting module. The system also incorporates a computational unit equipped with memory, which is linked to the module and has the aforementioned spectrum-changing system implemented. This memory stores the four developed functions for modifying the light spectrum range, such as in a microcontroller or computer, which also stores other previously mentioned data.

This computational unit can also function as the controller for the LED lighting module or can be connected to a separate LED module controller through which the spectrum range is modified. The autonomous system includes known power supply elements, such as a power supply unit.

The system also features a real-time clock and environmental temperature sensor for the cultivation area, both connected to the computational unit with memory and, preferably, to the LED lighting module controller.

The components are interconnected using known electronic communication means. Preferably, the system is housed within an enclosure. It is advantageous for the system to include a heat sink. Ideally, the enclosure of the described autonomous lighting fixture-system-is integrated with the heat sink.

Thus, the autonomous lighting system-the entire autonomous lighting fixture-includes an electroluminescent lighting module with at least two LED emitters, an LED module controller, and a computational unit equipped with memory and a system for modifying the radiation spectrum, such as a computer or microcontroller with implemented memory functions for light spectrum changes, including linear, exponential, logarithmic, and stepwise functions. The memory of the computational unit is programmed with the necessary data to enable the adjustment and execution of the spectrum change algorithm, such as the plant species depending on the cultivation duration according to the aforementioned classification, the established cultivation duration-from the seedling or rooted cutting stage (depending on the plant type) to the end of vegetation or the onset of flowering, the initial development stage of the seedling/rooted cutting, and the initial proportion of the optical radiation spectrum in the red and blue ranges depending on the development stage of the seedling/rooted cutting, selected according to the species classification, preferably the average or expected cultivation temperature-the known temperature at which the given species should be cultivated, and the expected cultivation duration from the initial stage of seedling/rooted cutting to, at most, the beginning of flowering (in the case of a species where flowering is not desirable, the vegetative period can be extended using the invention, as described earlier).

The entire system preferably includes a real-time clock and an environmental temperature sensor, which are connected to the computational unit with memory, such as a microcontroller, to transmit real-time measurements of time and actual cultivation temperature. This allows for adjusting the percentage of radiation and temperature according to the implemented wavelength change function and the specified cultivation days, as well as aligning the actual temperature in vertical farming with the specified cultivation temperature. These data are used to calculate whether a phase change in the plant's life cycle has occurred, which subsequently leads to a change in the light spectrum.

Wireless (e.g., Wi-Fi) or wired communication systems are used to connect the components of the autonomous module. The system preferably has an open architecture, allowing additional sensors to be integrated to monitor the state of the cultivation.

The autonomous system thus includes an electroluminescent lighting component-a LED lighting module with at least two electroluminescent light emitters, preferably a dual-channel LED module. The LED module contains at least one red-light emitter in the range of 615 nm to 680 nm, preferably with a peak radiation at 663 nm, and at least one blue-light emitter in the range of 420 nm to 480 nm, preferably with a peak radiation at 450 nm. A dual-channel module is preferably used, where the red channel is controlled independently from the blue channel. The red channel is equipped with one or more light emitters in the range of 615 nm to 680 nm, preferably with a peak radiation at 663 nm, and the blue channel is equipped with one or more light emitters in the range of 420 nm to 480 nm, preferably with a peak radiation at 450 nm. It is possible to use, in the red channel, at least one white LED with a correlated color temperature in the range of 1600K to 3000K, and in the blue channel, at least one white LED with a correlated color temperature in the range of 4000K to 6500K.

The autonomous system includes a computational unit equipped with memory and a light modification system connected to the LED module, making it a standalone unit. This unit is preferably integrated into a fixture with the lighting module and features an autonomous light modification system implemented in the computational unit, such as a microcontroller used within the fixture.

The system-an autonomous fixture with a lighting module-can operate entirely independently, meaning it does not require communication with an external controller (computer). Only a power connection is necessary. In this configuration, the system uses its internal clock and data stored in the module's memory to execute specific light modification algorithms stored in the spectrum-changing system. The user can select the light modification algorithm from four different functions stored in the memory of the autonomous lighting system in the spectrum-changing system.

This is a highly efficient solution when the user employs only a single lighting system (or a small number of them), such as for home cultivation, as it eliminates the need for additional external controllers (computers), thereby reducing costs and enabling independent cultivation tailored specifically to red-leaf plants.

The autonomous lighting system can also function as part of a larger lighting system. Such a system consists of N lighting modules, an external controller (computer), and wireless (Wi-Fi) or wired communication systems.

The advantage of integrating the systems into one larger system is the enhanced functionality, even for individual autonomous lighting modules. It allows users to create their own customized light control functions tailored to the developed modification algorithms, upload these algorithms to the memory of the autonomous lighting modules, modify the algorithms during cultivation, or directly control the system from an external computer.

### Electroluminescent lighting module

The invention also includes the standalone LED module, which is part of the aforementioned system.

The dual-channel electroluminescent LED module is equipped with at least two electroluminescent light emitters, specifically at least one red emitter in the range of 615 nm to 680 nm, preferably 640 nm to 660 nm, and more preferably with a peak radiation at 663 nm. The second electroluminescent channel is equipped with at least one blue-light emitter in the range of 420 nm to 480 nm, preferably 440 nm to 460 nm, and more preferably with a peak radiation at 450 nm.

It is advantageous to include, in the channel with the red electroluminescent emitter, white light emitters with a correlated color temperature in the range of 1600K to 3000K, and in the channel with the blue electroluminescent emitter, white light emitters with a correlated color temperature in the range of 4000K to 6500K.

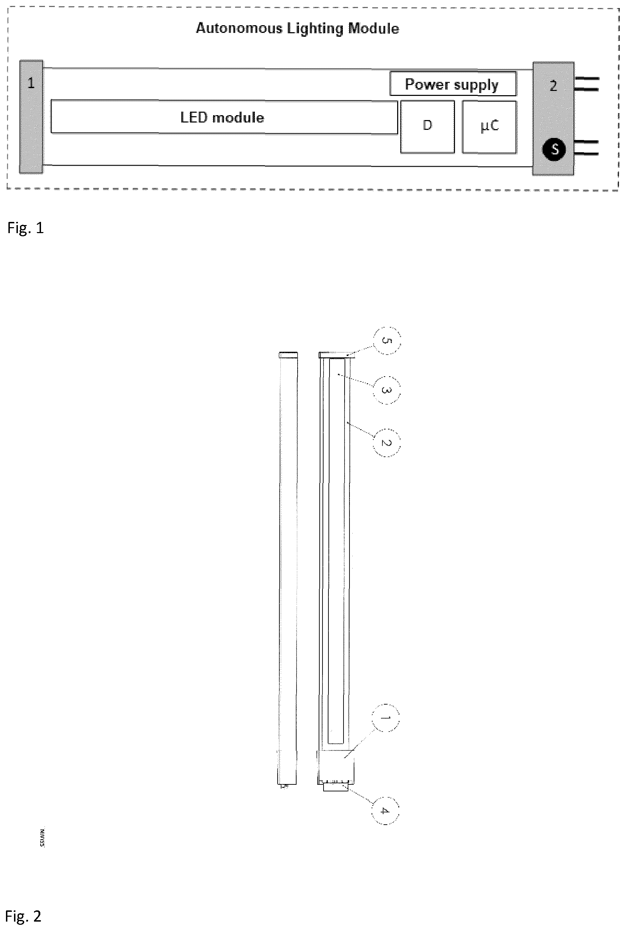

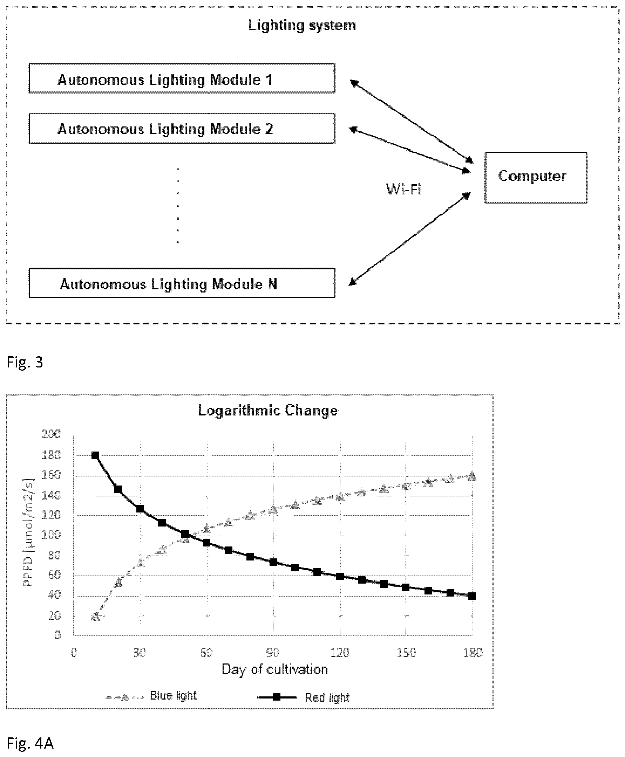

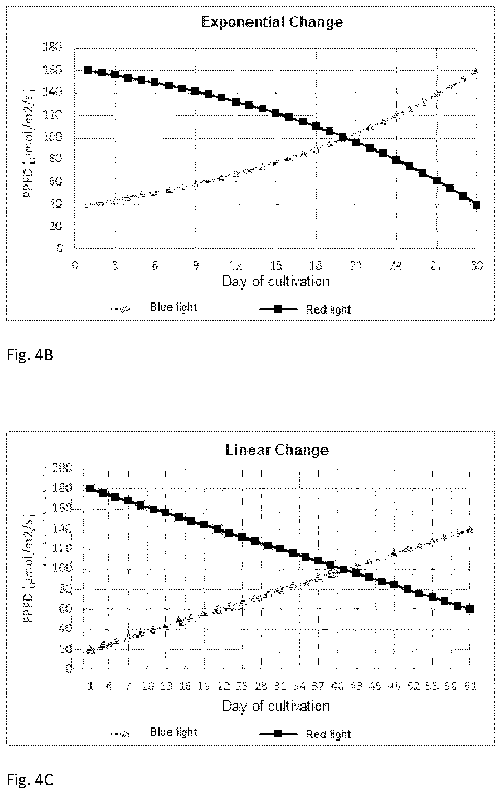

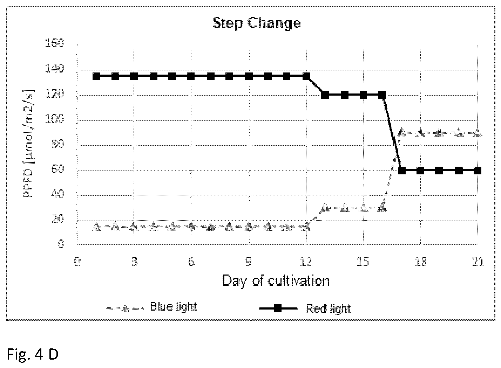

The invention is described in detail through examples and a drawing, where Fig. 1-2 shows the general schematic of the autonomous lighting fixture-the entire autonomous system, Fig. 3 a system of autonomous lighting modules, meaning a system comprising several autonomous units, and Fig. 4 illustrates spectral changes in lighting over time, including the developed spectral change functions - provided light change function. The graphs represent logarithmic changes over an extended period (180 days), exponential changes over a short period (30 days), linear changes over a medium-short period (61 days), and stepwise changes over a 21-day period. Fig. 1 shows a simplified block diagram of the autonomous system.

### Example

As shown in Fig. 1, the autonomous system was constructed with an LED lighting module, as previously described.

The system mainly included a dual-channel electroluminescent module with two electroluminescent light emitters. One red emitter operated within the range of 640 nm to 660 nm. The second electroluminescent channel was equipped with one blue-light emitter with peak radiation between 440 nm and 460 nm. The channel with the red electroluminescent emitter also contained a white-light emitter with a correlated color temperature of 2700-3000K, while the channel with the blue-light emitter contained a white-light emitter with a correlated color temperature of 4000-5700K.

The autonomous system includes a power supply. The system also features a real-time clock and an environmental temperature sensor, both connected to the computational unit with memory and to the LED lighting module controller.

The components are interconnected using known electronic communication means.

The system is enclosed in a housing. It also includes a heat sink.

As shown in Fig. 2, the applied lighting fixture consists of a dual-channel LED module (3) mounted in a housing that also functions as a heat sink (2), a power supply system, and a digital system-a known computational unit responsible for executing the active program for changing the optical radiation spectrum based on the cultivation duration. The computational unit is housed in an enclosure (1) located at one end of the fixture, equipped with a connector (4) for electrical connections. A multi-pin connector is used, enabling communication between the digital system and an external controller, as well as providing power to the system. A specialized end cap is located at the other end of the fixture (5). Both the end cap and the housing of the power supply and digital system are designed to be higher than the LEDs mounted on the module. This reduces the risk of damage to the LEDs if the fixture is improperly placed by an installer.

When lenses or protective elements for the LEDs are used, both the end cap and the housing of the power supply and digital system should also be higher than the optical components to prevent scratching of these components if the fixture is placed with the optics facing downward. A design incorporating optical systems ensures the fixture's seal integrity.

The entire system also includes a real-time clock and a sensor for the cultivation environment's temperature. These are connected to the computational unit with memory-a microcontroller-to transmit real-time measurements of time and temperature during cultivation, allowing adjustments to the percentage of radiation and temperature based on the implemented wavelength change function.

The digital system, an integral component of the fixture, operated using communication protocols such as Wi-Fi, Bluetooth, ZigBee, Z-Wave, and wired communication with an external controller. Through a known communication medium, the fixture receives only the information regarding the plant species and the cultivation duration. Control and management are executed via the digital system embedded within the fixture. The embedded digital system is responsible for implementing the program that adjusts the channel drive based on the selected program. Spectrum changes over time are achieved by adjusting the output current of the power supply's converters.

Thanks to the built-in real-time clock, it is possible to modify channel drive levels throughout the entire cultivation process. This solution allows for significant energy savings by avoiding continuous communication. It enables a one-time connection to transfer the necessary information to the devices. Periodic reconnections for device clock synchronization can also be beneficial.

The power supply system, which enables control of the output current value for each of the two independent LED chains, can be implemented using buck, boost, buck-boost, SEPIC, or flyback converters.

As shown in Fig. 3, it is possible to use multiple autonomous systems-lighting modules-connected to a central computational unit equipped with memory, such as a computer.

The autonomous lighting system can operate within a larger lighting system, which consists of **N** autonomous systems (modules), an external controller such as a computer, and wireless (e.g., Wi-Fi) or wired communication systems. However, a single autonomous system-an autonomous lighting fixture-does not require an external controller.

Method for Developing Light Change Functions During the Life Cycle of Red-Leaf Plants To select the appropriate algorithm for light spectrum changes, studies were conducted on several representative plant species, which were divided into four groups as described below. Based on the research, it was determined that different functions for modifying the spectrum range over the plant's life cycle are possible. Four types of transition functions were developed, ranging from the initial optical radiation spectrum at the beginning of cultivation to the previously described final optical radiation spectrum. On this basis, four light change functions were developed: linear, logarithmic, stepwise, and exponential.

Among the species of long-growing red-leaf plants, characterized by extended transitions from the seedling or rooted cutting stage (depending on the plant type) to commercial size, were Cordyline fruticosa, Caladium, and Berberis thunbergii. These species were cultivated for 180 days, from rooted cuttings to the onset of flowering.

Among the species of short, fast-growing red-leaf plants were lettuce varieties such as Lollo Rossa, Apache, Rosela, Radicchio, Rosemary, Redin, Verala, and Butterhead Jubilatka. These species were cultivated for 21 to a maximum of 30 days from rooted cuttings, with the vegetative period extended. Stepwise or exponential functions were applied to these species.

Among the species of red-leaf plants with a moderate growth rate was Atriplex hortensis, the red variety of garden orache. These species were cultivated for 60 days, from rooted cuttings to the beginning of flowering. Among the species of red-leaf decorative plants were Celosia, Caladium Scarlet Flame, Iresine herbstii, and Oxalis triangularis. These species were cultivated for 21 days from rooted cuttings.

Based on previous studies involving the development of methods for changing the light spectrum from a predominant red light spectrum to blue, previously developed change functions were applied. Logarithmic functions were used for the aforementioned long-growing red-leaf plant species (Group 1), exponential functions for the fast-growing group (Group 2), linear functions for Group 3, and stepwise functions for Group 4, with two stepwise changes applied on days 12 and 16.

In the computational unit-a microcontroller installed in the lighting fixture and equipped with memory-data were input, including plant species, cultivation time classification, and the corresponding function selection from prior research. Additional data included average temperature, cultivation duration (time between the rooted cutting phase and the end of cultivation), the initial development stage of the cutting (growth advancement), and the initial proportion of red light in the optical radiation spectrum, as illustrated in the graphs. Proper cultivation temperature specific to the given species was also input, allowing the program stored in the computational unit to adjust the actual temperature accordingly. Real-time cultivation time and actual temperature data were transmitted to the microcontroller. Based on this, the spectrum change method was applied according to the developed change functions.

These functions are shown in Fig. 4. The cultivation period ranged from 21 to 180 days, depending on the group. In the computational unit with memory (microcontroller), in addition to the plant species and the change functions, the following data were input: the number of cultivation days from the seedling/rooted cutting phase to the beginning of flowering (depending on the species), corresponding to the functions shown in the graphs in Fig. 3-180 days, 61 days, 30 days, and 21 days-and the cultivation temperature according to the aforementioned species.

In Fig. 4, the graphs of example lighting changes during the cultivation period are presented. The cultivation was carried out in a PPFD range of 150-800 µmol/m²/s, with 150-200 µmol/m²/s determined as the threshold for proper growth of red-leaf plants. The example illustrates the total cumulative light intensity (PPFD) at levels of 150-800 µmol/m²/s, particularly 150-200 µmol/m²/s, along with cultivation time, initial blue light intensity, and final blue light intensity. For example, for a 21-day cultivation period, the initial blue light intensity was 10% of the total (15 µmol/m²/s), while the final blue light intensity was 60% of the total (90 µmol/m²/s).

Improved plant growth with favorable coloration and simultaneous energy savings were observed.

The system described in Example 1 and shown in Fig. 2 was developed. The applied lighting fixture consists of a dual-channel LED module (3) mounted in a housing that also functions as a heat sink (2), a power supply system, and a digital system responsible for executing an active program to modify the optical radiation spectrum over the cultivation period. The digital system is housed in an enclosure (1) located at one end of the fixture, equipped with a multi-pin connector (4) enabling communication between the digital system and an external controller, as well as supplying power to the system. A specialized end cap is located at the other end of the fixture (5). Both the end cap and the housing of the power supply and digital system are designed to be higher than the LEDs mounted on the module.

This design reduces the risk of damage to the LEDs if the fixture is improperly placed by an installer.

When lenses or protective elements for the LEDs are used, both the end cap and the housing of the power supply and digital system should also be higher than the optical components to prevent scratching them if the fixture is placed with the optics facing downward. The construction, incorporating optical systems, ensures the fixture's seal integrity.

This system was used for cultivating Rosela lettuce. Stepwise and exponential functions were applied. To inhibit flowering, the proportion of blue light was significantly increased on the 20th day of cultivation in the exponential function, and on the 16th day in the stepwise function, which contributed to achieving the desired harvest yield. This is illustrated in the graphs.

## Claims

1. Method for activating vegetation and controlling flowering of red-leaf plants, comprises step of lighting during cultivation using changes in the optical radiation spectrum, **characterized in that**, the initial intensity of blue light is below 20% of the total value and the final intensity of blue light being above 70% of the total value, wherein in the initial phase of plant growth for seedlings or rooted cuttings, cultivation is carried out with blue and red radiation contribution at a ratio of less than 20% of the blue component and at least 80% of the red component, depending on the initial phase of cultivation, such that the earlier the phase, the higher the proportion of the red component is used, while at the beginning of the vegetation stage, a higher initial proportion of red radiation is used, but less than 80%, preferably less than 70%, and the proportion of the blue component is increased depending on the cultivation duration, and additionally the intensity of lighting (PPFD) is changed using an exponential, linear, logarithmic, or stepwise light change function, depending on the cultivation duration, while during cultivation, the cultivation time and, preferably, the cultivation temperature is monitoring.

2. The method according to claim 1, wherein if it is necessary to extend the vegetation period to avoid undesired flowering, preferably to inhibit flowering, the blue component is adjusted to exceed 20%, preferably from 30% to 100%, increasing this component in the selected light change function such that the later the phase of plant development, the faster the higher proportion of blue radiation is selected.

3. The method according to claims 1-2, wherein red light is used in the range of 615 nm to 680 nm, preferably with a peak radiation of 663 nm, and blue light is used in the range of 420 nm to 480 nm, preferably with a peak radiation of 450 nm.

4. The method according to claim 3, wherein red light is used in the range of 640 nm to 660 nm, and blue light in the range of 440 nm to 460 nm.

5. The method according to claims 1-4, **characterized in that** during cultivation, the proportion of red and blue light is selected so as to deliver the same number of photons throughout cultivation.

6. The method according to claims 1-4, wherein the percentage of light spectrum for plant species is selected depending on the growth rate from the seedling or rooted cutting phase to vegetation and, preferably, the onset of flowering, such that the percentage of blue light radiation is increased during cultivation progresses and transitions to subsequent growth phases.

7. The method according to claims 1-7, wherein the type of light change function is selected based on the cultivation duration, such that light change based on logarithmic function is used for long-growing red-leaf plant species, exponential function for fast-growing species, linear function for moderately growing species, and stepwise function for decorative plants.

8. The method according to claims 1-7, wherein the PPFD intensity is maintained in the range of 150-800 µmol/m²/s, preferably up to 200.

9. Autonomous lighting system for activating vegetation and controlling flowering of red-leaf plants, **characterized in that** it comprises electroluminescent lighting module comprising at least one type of electroluminescent emitter in the red wavelength range and at least one type of electroluminescent emitter in the blue wavelength range, preferably a dual-channel lighting module, wherein red light emitter is in the range of 615 nm to 680 nm and a blue light emitter is in the range of 420 nm to 480 nm, and it comprises unit with memory interrelated with the module, where light change functions for changing the light spectrum in the memory are implemented such that increasing the blue component proportion depending on the cultivation duration from the seedling or rooted cutting phase to vegetation and, preferably, the onset of flowering, while the function forms linear, logarithmic, stepwise, and/or exponential function, and additionally in the unit the cultivation duration from the seedling or rooted cutting phase to the first signs of flowering at most, the initial development stage of the cultivated plant, and, preferably, the average cultivation temperature are stored.

10. The system according to claim 9, wherein the lighting module is equipped with at least one emitter in the white light wavelength range.

11. The system according to claims 9-10, wherein the red electroluminescent channel contains a white light emitter with a correlated color temperature of 1600K to 3000K, and the blue channel contains a white light emitter with a correlated color temperature of 4000K to 6500K.

12. The system according to claims 9-11, wherein it comprises a controller for the lighting module.

13. The system according to claims 9-12, wherein comprises a real-time clock and an environmental temperature sensor, both associated with the computational unit with memory and, preferably, with the lighting module controller.

14. The system according to claims 9-13, wherein the system is in an enclosure.

15. The system according to claims 9-14, wherein it comprises a heat sink.

16. Electroluminescent module comprises at least two electroluminescent light emitters, **characterized in that** it comprises at least one red light emitter in the range of 615 nm to 680 nm, preferably 640 nm to 660 nm, and at least one blue light emitter in the range of 420 nm to 480 nm, preferably 440 nm to 460 nm.

17. The module according to claim 16, wherein the red electroluminescent channel contains a white light emitter with a correlated color temperature of 1600K to 3000K, and the blue channel contains a white light emitter with a correlated color temperature of 4000K to 6500K.
